# EUROPEAN PATENT SPECIFICATION

(11) **EP 1 505 412 B1**
(45) Date of publication and mention of the grant of the patent: **05.11.2008**
(21) Application number: 04018338.6
(22) Date of filing: 03.08.2004
(51) Int. Cl.: G02B 1/04, C08K 5/07, C08K 5/132, C08J 7/06

(54) **Plastic lens and process for producing the lens**
Kunststofflinse und Verfahren zu deren Herstellung.
Lentille en matière synthétique et procédé pour sa fabrication.

(30) Priority: 05.08.2003 JP 2003287135
(43) Date of publication of application: 09.02.2005
(73) Proprietor: HOYA CORPORATION, Shinjyu-ku, Tokyo 161-8525 (JP)
(72) Inventor: Kosaka, Masahisa, Shinjyu-ku, Tokyo 161-8525 (JP); Itoh, Shinsuke, Shinjyu-ku, Tokyo 161-8525 (JP)
(74) Representative: Albrecht, Thomas

(56) References cited:
- EP-A- 0 371 140
- EP-A- 0 437 374
- EP-B- 0 899 302
- JP-A- 6 088 066
- US-A- 4 108 827
- US-A1- 2003 236 418

## Description

### Field of the Invention

The present invention relates to a plastic lens exhibiting an excellent property for absorbing ultraviolet light and a process for producing the lens. More particularly, the present invention relates to a plastic lens which is yellowed to a small degree even though the lens absorbs ultraviolet light having a wavelength of around 400 nm and a process for producing the lens.

### Prior Art

Ultraviolet light is an electromagnetic wave having a wavelength in the range of about 200 to 400 nm and is considered to adversely affect the human health in various ways. It is increasingly desired for a spectacle lens that the lens absorbs ultraviolet light to protect the human eyes from ultraviolet light. There are various processes for providing the ability to absorb ultraviolet light to a plastic spectacle lens. As the first of such processes, it is proposed that 2,2'-dihydroxy-4-methoxybenzophenone, 2,2'-dihydroxy-4-n-octoxybenzophenone or the like is mixed into a plastic lens monomer as the ultraviolet light absorbent, and a plastic lens is prepared by polymerizing the obtained plastic lens monomer (for example Japanese Patent Application Laid-Open No. Showa 50(1975)-50049, Japanese Patent Application Laid-Open No. Showa 58(1983)-122501, Japanese Patent Application Laid-Open No. Heisei 2(1990)-171716, Japanese Patent Application Laid-Open No. Heisei 2(1990)-93422, Japanese Patent Application Laid-Open No. 20 Showa 62(1983)-254119).

However, when a lens absorbing ultraviolet light having a wavelength up to around 400 nm is produced by using a conventionally used ultraviolet light absorbent such as 2,2'-dihydroxy-4-methoxybenzophenone, 2,2'-dihydroxy-4-n-octoxybenzophenone and the like in accordance with the first process, a problem arises in that the prepared lens is markedly yellowed to cause poor appearance, in particular, when diethylene glycol bisallylcarbonate, which is the typical material for plastic spectacle lenses, is used.

As the second process for providing the ability to absorb ultraviolet light to a plastic spectacle lens, in accordance with the same process as that for tinting a plastic lens, the plastic lens is impregnated with an ultraviolet light absorbent by dipping the plastic lens into an aqueous fluid heated at 80 to 100°C in which the ultraviolet light absorbent is dispersed (for example, Japanese Patent Application Laid-Open No. 2001-91908). It is estimated that most of the commercial plastic spectacle lenses having the property of absorbing ultraviolet light having a wavelength up to 400 nm are produced in accordance with the second process.

However, in the preparation of a plastic lens having the property of absorbing ultraviolet light having a wavelength up to around 400 nm in accordance with the second process, it is necessary that the lens be dipped for a time as long as about 40 minutes when a sufficient ability to absorb ultraviolet light is provided to the plastic spectacle lens, and this causes a decrease in the productivity. To improve the productivity, it is proposed that an organic solvent is used in place of water which is conventionally used. However, there is the possibility that the plastic lens absorbing ultraviolet light having the wavelength up to about 400 nm produced in accordance with this process is more markedly yellowed.

As the third process for providing the ability to absorb ultraviolet light to a plastic spectacle lens, the surface of the plastic lens is coated with a substance absorbing andlor scattering ultraviolet light (for example, Japanese Patent Application Laid-Open No. Heisei 9(1997)-265059).

However, the third process has problems in that, when the layer absorbing ultraviolet light is formed, there are possibilities that scratch resistance of the lens is insufficient and that the formed coating film of the layer tends to be cleaved.

Furthermore, Japanese patent application JP 6088066 A discloses an ultraviolet-absorbing composition containing an ultraviolet absorber having a polymerizable double bond linked through a urethane linkage to the backbone of a benzophenone ultraviolet absorber.

European patent application EP 0 371 140 discloses a plastic lens consisting of a copolymer obtained by copolymerizing a monomer mixture comprising 5-40% by weight of diethylene glycol bisallylcarbonate, 5-40% by weight of benzyl methacrylate, 14-88% by weight diallyl phthalate and 2-6% by weight of a C14 alkyl methacrylate, which is suitable to be used as an ophthalmic lens. The patent discloses the possibilty to add a polymerization initiator and an ultraviolet absorber to the monomer mixture, wherein using as benzophenone compound 2,2'-dihydroxy-4-methoxybenzophenone.

### Disclosure of the Invention

### Problems to be overcome by the Invention

The present invention has been made to overcome the above problems. The present invention has a first object of providing a lens which does not exhibit adverse effects on the heretofore exhibited property for absorbing ultraviolet light having a wavelength up to about 400 nm and is yellowed to a smaller degree than that of conventional plastic lenses. The present invention has a second object of providing a process for producing the above lens in which the time of the production can be decreased.

### Means for overcoming the Problems

As the result of intensive studies by the present inventors to achieve the above objects, it was found that a plastic lens exhibiting an excellent property for absorbing ultraviolet light having the wavelength up to about 400 nm and yellowed to a small degree could be obtained when a specific ultraviolet light absorbent was added to the material monomer of the plastic substrate and the plastic lens was produced from the obtained mixture. The present invention was completed based on this knowledge. The present invention provides a plastic lens which comprises a plastic substrate selected from a poly(thio)urethane resin, a sulfur-containing resin obtained by using compounds having an epithio group as the raw material and a resin obtained by using diethylene glycol bisallylcarbonate-based monomers as the raw material, the plastic substrate comprising a benzophenone derivative represented by following general formula (I): 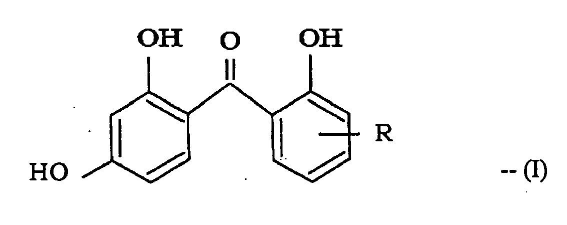 wherein R represents a linear or branched alkyl group having 2 to 12 carbon atoms or an alkoxyl group having 2 to 12 carbon atoms.

### Effect of the Invention

The plastic lens of the present invention does not exhibit adverse effects on the heretofore exhibited property for absorbing ultraviolet light having a wavelength up to about 400 nm and is yellowed to a smaller degree than that of conventional plastic lenses. In accordance with the process for producing a plastic lens of the present invention, the plastic lens having the above property can be efficiently produced in a decreased time of production.

### Preferable Modes for carrying out the Invention

It has been unknown that the compound represented by general formula (I), which is used in the present invention, can be used as the ultraviolet light absorbent when a plastic substrate, in particular, a plastic substrate using diethylene glycol bisallylcarbonate as the raw material is produced. Moreover, it has been unknown at all that a plastic lens which absorbs ultraviolet light having a wavelength up to about 38520 nm and is yellowed to a smaller degree than that of conventional plastic lenses can be obtained when the compound represented by general formula (I) is added to a raw material and the obtained mixture is polymerized.

The benzophenone derivative represented by general formula (I) is not particularly limited. It is essential that R represents a linear or branched alkyl group having 2 to 12 carbon atoms or an alkoxyl group having 2 to 12 carbon atoms, and the effect of the present invention is exhibited within this range. It is preferable that R represents a linear or branched alkyl group having 6 to 10 carbon atoms or an alkoxyl group having 6 to 10 carbon atoms. The position of the group represented by R may be any of the 3- to 6-positions, and the 4-position is preferable.

Examples of the benzophenone derivative represented by general formula (I) include 2,2',4'-trihydroxy-4-ethylbenzophenone, 2,2',4'-trihydroxy-4-propylbenzophenone, 2,2',4'-trihydroxy-4-i-propylbenzophenone, 2,2',4'-trihydroxy-4-butylbenzophenone, 2,2',4'-trihydroxy-4-i-butylbenzophenone, 2,2,4-trihydroxy-4-tert-butylbenzophenone, 2,2',4'-trihydroxy-4-pentylbenzophenone, 2,2',4'-trihydroxy-4-hexylbenzophenone, 2,2',4'-trihydroxy-4-heptyl-benzophenone, 2,2',4'-trihydroxy-4-octylbenzophenone, 2,2',4'-trihydroxy-4-tert-octylbenzophenone, 2,2',4'-trihydroxy-4-nonylbenzophenone, 2,2',4'-trihydroxy-4-decylbenzophenone, 2,2',4'-trihydroxy-4-undecylbenzophenone, 2,2',4'-trihydroxy-4-dodecylbenzophenone, 2,2',4'-trihydroxy-4-ethoxybenzophenone, 2,2',4'-trihydroxy-4-propyloxybenzophenone, 2,2',4'-trihydroxy-4-i-propyloxybenzophenone, 2,2',4'-trihydroxy-4-butoxybenzophenone, 2,2',4'-trihydroxy-4-i-butyloxybenzophenone, 2,2',4'-trihydroxy-4-tert-butyloxybenzophenone, 2,2',4'-trihydroxy-4-pentyloxybenzophenone, 2,2',4'-trihydroxy-4-hexyloxybenzophenone, 2,2',4'-trihydroxy-4-heptyloxybenzophenone, 2,2',4'-trihydroxy-4-octyloxybenzophenone, 2,2',4'-trihydroxy-4-tert-octyloxybenzophenone, 2,2',4'-trihydroxy-4-nonyloxybenzophenone, 2,2',4'-trihydroxy-4-decyloxybenzophenone, 2,2',4'-trihydroxy-4-undecyloxybenzophenone and 2,2',4'-trihydroxy-4-dodecyloxybenzophenone.

The amount of the compound represented by general formula (I) is different depending on the type of the material monomer for the plastic substrate and the desired property for absorbing ultraviolet light. It is preferable that the compound represented by general formula (I) is used in an amount in the range of 0.01 to 5% by weight and more preferably in the range of 0.01 to 1% by weight per the entire amount of the material monomer of the plastic substrate. It is preferable that the plastic substrate has a YI value of 1.8 or smaller and more preferably in the range of 0.7 to 1.8 at the central portion when the central portion has a thickness of 2.2 mm. It is also preferable that the transmittance of light having a wavelength of 385 nm is 5.0% or smaller. To obtain the plastic substrate having the above properties, it is most preferable that the amount of the compound represented by general formula (I) is used in the range of 0.02 to 0.20 parts by weight per 100 parts by weight of the material monomer for the plastic substrate although the amount is different depending on the type of the ultraviolet light absorbent.

The resins used as the plastic substrate in the present invention include poly(thio)urethane resins, sulfur-containing resins obtained by using compounds having epithio group as the raw material and resins obtained by using diethylene glycol bisallylcarbonate-based monomers as the raw material. Among these resins, the resins obtained by using diethylene glycol bisallylcarbonate-based monomers as the raw material are preferable. By adding the compound represented by general formula (I) to these resins, the substrate yellowed to a smaller degree than that of conventional substrates can be obtained easily without adverse effects on the heretofore exhibited property for absorbing ultraviolet light.

The diethylene glycol bisallylcarbonate-based monomer means diethylene glycol bisallylcarbonate alone or a mixed monomer of diethylene glycol bisallylcarbonate with monomers copolymerizable with diethylene glycol bisallylcarbonate. Examples of the monomer copolymerizable with diethylene glycol bisallylcarbonate include aromatic vinyl monomers such as styrene, α-methylstyrene, vinyltoluene, chlorostyrene, chloromethylstyrene and divinylbenzene; mono(meth)acrylates such as methyl (meth)acrylate, n-butyl (meth)acrylate, n-hexyl (meth)acrylate, cyclohexyl (meth)acrylate, 2-ethylhexyl (meth)acrylate, methoxydiethylene glycol (meth)acrylate, methoxypolyethylene glycol (meth)acrylate, 3-chloro-2-hydroxypropyl (meth)acrylate, stearyl (meth)acrylate, lauryl (meth)acrylate, phenyl (meth)acrylate, glycidyl (meth)acrylate and benzyl (meth)acrylate; mono(meth)acrylates having hydroxyl group such as 2-hydroxyethyl (meth)acrylate, 2-hydroxypropyl (meth)acrylate, 3-hydroxypropyl (meth)acrylate, 3-phenoxy-2-hydroxypropyl (meth)acrylate and 4-hydroxybutyl (meth)acrylate; di(meth)acrylates such as ethylene glycol di(meth)acrylate, diethylene glycol di(meth)acrylate, triethylene glycol di(meth)acrylate, polyethylene glycol di(meth)acrylate, 1,3-butylene glycol di(meth)acrylate, 1,6-hexanediol di(meth)acrylate, neopentyl glycol di(meth)acrylate, polypropylene glycol di(meth)acrylate, 2-hydroxy-1,3-di(meth)acryloxypropane, 2,2-bis[4-((metb)acryloxy-ethoxy)phenyl]-propane, 2,2-bis[4-((meth)acryloxy· diethoxy)phenyl]-propane and 2,2-bis[4-((meth)acryloxy· polyethoxy)-phenyl]propane; tri(meth) acrylates such as trimethylolpropane trimethacrylate and tetramethylolmethane trimethacrylate; tetra(meth)acrylates such as tetramethylolmethane tetra(meth)acrylate (in the present specification, a (meth)acrylate means a methacrylate or an acrylate); diallyl phthalate; diallyl isophthalate; and diallyl terephthalate. In the present invention, compounds having an aromatic ring are preferable among these compounds from the standpoint of providing a plastic spectacle lens having a great refractive index. Copolymers obtained from mixed monomers of diethylene glycol bisallylcarbonate and other monomers have been known. Examples of such copolymers include copolymers disclosed in Japanese Patent Application Laid-Open Nos. Showa 54(1979)-41965 and Showa 51(1976)-125487 and International Patent Publication (Republished in Japan) No. Heisei 01-503809. Mixtures of diethylene glycol bisallylcarbonate and monomers copolymerizable with diethylene glycol bisallylcarbonate described in the specifications of these applications are included in the diethylene glycol bisallylcarbonate-based monomer in the present invention.

The plastic substrate used in the present invention may have various properties and can be suitably selected from various substrates having different properties in accordance with the object of the use. For example, when a substrate uses diethylene glycol bisallylcarbonate as the raw material, the plastic substrate exhibiting the excellent property of absorbing ultraviolet light and preventing yellowing can be obtained by maintaining the YI value at 1.8 or smaller and preferably in the range of 0.7 to 1.8 and the transmittance of light having a wavelength of 385 nm at 5.0% or smaller at the central portion when the central portion has a thickness of 2.2 mm.

The plastic spectacle lens of the present invention can be obtained by polymerizing the plastic lens monomer to which the compound represented by general formula (I) as the ultraviolet light absorbent is added and mixed together or by dipping the substrate formed in advance into a fluid in which the above ultraviolet absorbent is dispersed. The process for polymerizing the plastic lens monomer is not particularly limited. In general, the cast polymerization is used. When the plastic lens monomer to which the compound represented by general formula (I) as the ultraviolet light absorbent is added and mixed together is polymerized, after the compound represented by general formula (I) as the ultraviolet light absorbent and the above plastic lens monomer are mixed together, the obtained mixed fluid is cast into a mold for forming a lens, and the plastic spectacle lens is obtained by heating at a temperature in the range of -20 to 150°C. To the mixed fluid of the compound represented by general formula (I) as the ultraviolet light absorbent and the plastic lens monomer, for example, polymerization initiators such as IPP (isopropyl peroxydicarbonate), polymerization catalysts such as those described in Japanese Patent Application Laid-Open Nos. Heisei 07(1995)-063902, Heisei 07(1995)-104101, Heisei 09(1997)-208621 and Heisei 09(1997)-255781, internal mold releases such as those described in Japanese Patent Application Laid-Open Nos. Heisei 01(1989)-163012 and Heisei 03(1991)-281312, antioxidants and other auxiliary agents can be added, where necessary.

When the substrate formed in advance is dipped into a fluid in which the ultraviolet light absorbent is dispersed, in general, a fluid prepared by adding water or an organic solvent such as an alcohol to the ultraviolet light absorbent is used. Surfactants for improving dispersion of the ultraviolet light absorbent, swelling agents for swelling the plastics such as benzyl alcohol and antioxidants may be further added. The concentration of the ultraviolet absorbent in the fluid is suitably selected in accordance with the number of the lens treated for providing the property for absorbing ultraviolet light, the temperature condition, the pressure condition, the physical properties of the substrate and the desired degree of absorption of ultraviolet light and cannot be generally decided. In general, the concentration is in the range of 0.01 to 20 g per 1 liter of the fluid of the ultraviolet light absorbent. When the surfactant is added, the amount of the surfactant is not particularly limited. The amount of the surfactant is, in general, in the range of 1 to 50 ml per 1 the fluid of the ultraviolet light absorbent are not particularly limited as long as the optical properties of the lens are not adversely affected. It is preferable that the temperature of the fluid is in the range of 100 to 130°C so that the ultraviolet light is quickly diffused within the lens. The YI value and the transmittance are measured at the portion having the central thickness of the lens since the YI value and the transmittance change depending on the central thickness.

The plastic lens obtained in accordance with the present invention can be tinted with a tinting agent. A hard coat film may be formed on the plastic lens using a coating fluid containing fine particles of an inorganic substance such as an organic silicon compound, tin oxide, silicon oxide, zirconium oxide and titanium oxide to improve resistance to scratches. A primer layer containing a polyurethane as the main component may be formed to improve impact resistance. An antireflection film may be formed using silicon oxide, titanium dioxide, zirconium oxide or tantalum oxide to provide the antireflection property. A water-repelling film may be formed on the antireflection film using an organosilicon compound having fluorine atom to improve the water-repelling property.

The present invention will be specifically described in the following with reference to examples. However, the present invention is not limited to the examples. The properties described in the following were obtained in accordance with the following methods.
(1) YI value: The YI value was obtained in accordance with the method for obtaining the yellow degree of plastics and the method for testing the yellowing of plastics described in Japanese Industrial Standard K7103-1977.
(2) Transmittance: The transmittance at the wavelength of 385 nm was measured by using a spectrophotometer (U3410, manufactured by HITACHI SEISAKUSHO Co., Ltd.).

### Example 1

After 0.05 parts by weight of 2,2',4'-trihydroxy-4-octyloxybenzophenone as the ultraviolet absorbent was added to 91.89 parts by weight of diethylene glycol bisallylcarbonate and dissolved to form a homogeneous solution, 11.11 parts by weight of a diethylene glycol bisallylcarbonate solution containing 27% of IPP (isopropyl peroxydicarbonate) as the polymerization initiator was added. After the obtained mixture was sufficiently mixed under stirring, the mixture was filtered through a filter of 0.2 micron to remove foreign substances in the raw material and cast into a mold for forming a lens composed of glass molds, a gasket made of a resin and a fixing spring (0.00D; the diameter of the lens: 70 mm; the thickness of the lens: set at 2.2 mm). To cure the monomer cast into the mold, the polymerization was conducted by slowly elevating the temperature from 40°C to 85°C over 20 hours, followed by keeping the temperature at 85°C for 30 minutes and lowering the temperature to 80°C over 30 minutes while the mold was held at a position such that the face of the mold corresponding to the concave face of the lens was kept at the lower side and approximately horizontal. After the polymerization was completed, the gasket and the glass molds were disassembled, and a lens were obtained after a heat treatment (annealing) at 120°C for 1 hour.

The obtained lens had a YI value of 1.55 and a transmittance of ultraviolet light having a wavelength of 385 nm of 1.0%. Thus, the lens exhibited the excellent property for reducing ultraviolet light.

### Example 2

A lens was prepared in accordance with the same procedures as those conducted in Example 1 except that, after 0.05 parts by weight of 2,2',4'-trihydroxy-4-octyloxybenzophenone as the ultraviolet absorbent was added to 71.89 parts by weight of diethylene glycol bisallylcarbonate and 20.00 parts by weight of methyl methacrylate and dissolved to form a homogeneous solution, 10.61 parts by weight of a diethylene glycol bisallylcarbonate solution containing 27% of IPP (isopropyl peroxydicarbonate) as the polymerization initiator was added.

The obtained lens had a YI value of 1.35 and a transmittance of ultraviolet light having a wavelength of 385 nm of 1.0%. Thus, the lens exhibited the excellent property for reducing ultraviolet light.

### Example 3

A lens was prepared in accordance with the same procedures as those conducted in Example 1 except that, after 0.06 parts by weight of 2,2',4'-trihydroxy-4-octyloxybenzophenone as the ultraviolet absorbent was added to 91.89 parts by weight of diethylene glycol bisallylcarbonate and dissolved to form a homogeneous solution, 11.11 parts by weight of a diethylene glycol bisallylcarbonate solution containing 27% of IPP (isopropylperoxydicarbonate) as the polymerization initiator was added.

The obtained lens had a YI value of 1.58 and a transmittance of ultraviolet light having a wavelength of 385 nm of 0.5%. Thus, the lens exhibited the excellent property for reducing ultraviolet light.

### Example 4

A lens was prepared in accordance with the same procedures as those conducted in Example 1 except that, after 0.06 parts by weight of 2,2',4'-trihydroxy-4-dodecyloxybenzophenone as the ultraviolet absorbent was added to 91.89 parts by weight of diethylene glycol bisallylcarbonate and dissolved to form a homogeneous solution, 11.11 parts by weight of a diethylene glycol bisallylcarbonate solution containing 27% of 1PP (isopropyl peroxydicarbonate) as the polymerization initiator was added.

The obtained lens had a YI value of 1.75 and a transmittance of ultraviolet light having a wavelength of 385 nm of 1.1%. Thus, the lens exhibited the excellent property for reducing ultraviolet light.

### Comparative Example 1

A plastic lens was prepared in accordance with the same procedures as those conducted in Example 1 except that 0.05 parts by weight of 2,2',4,4'-tetrahydroxybenzophenone was used as the ultraviolet absorbent. The obtained lens had a Y1 value of 1.94 which showed yellowing and a transmittance of ultraviolet light having a wavelength of 385 nm of 1.0%.

### Comparative Example 2

A plastic lens was prepared in accordance with the same procedures as those conducted in Example 1 except that 1.00 parts by weight of 2-hydroxy-4-methoxybenzophenone was used as the ultraviolet absorbent. The obtained lens had a YI value of 2.14 which showed yellowing and a transmittance of ultraviolet light having a wavelength of 385 nm of 0.5%.

### Comparative Example 3

A plastic lens was prepared in accordance with the same procedures as those conducted in Example 1 except that 0.15 parts by weight of 2-(2-hydroxy-4-octyloxyphenyl)benzotriazole was used as the ultraviolet absorbent. The obtained lens had a YI value of 3.27 which showed yellowing and a transmittance of ultraviolet light having a wavelength of 385 nm of 1.9%.

### Comparative Example 4

A plastic lens was prepared in accordance with the same procedures as those conducted in Example 1 except that 0.15 parts by weight of 2-(2,4-hydroxyphenyl)benzotriazole was used as the ultraviolet absorbent. The obtained lens exhibited a YI value of 3.84 which showed yellowing and a transmittance of ultraviolet light having a wavelength of 385 nm of 1.0%.

### Comparative Example 5

A plastic lens was prepared in accordance with the same procedures as those conducted in Example 1 except that 0.08 parts by weight of 5-chloro-2-(2,4-dihydroxyphenyl)benzotriazole was used as the ultraviolet absorbent. The obtained lens had a YI value of 3.66 which showed yellowing and a transmittance of ultraviolet light having a wavelength of 385 nm of 0.5%.

### Comparative Example 6

A plastic lens was prepared in accordance with the same procedures as those conducted in Example 1 except that 0.08 parts by weight of 2,2'-dihydroxy-4-methoxybenzophenone was used as the ultraviolet absorbent. The obtained lens had a YI value of 2.40 which showed yellowing and a transmittance of ultraviolet light having a wavelength of 385 nm of 1.2%.

### Comparative Example 7

A plastic lens was prepared in accordance with the same procedures as those conducted in Example 1 except that 0.15 parts by weight of 2,2'-dihydroxy-4-octyloxybenzophenone was used as the ultraviolet absorbent. The obtained lens had a YI value of 2.22 which showed yellowing and a transmittance of ultraviolet light having a wavelength of 385 nm of 1.0%.

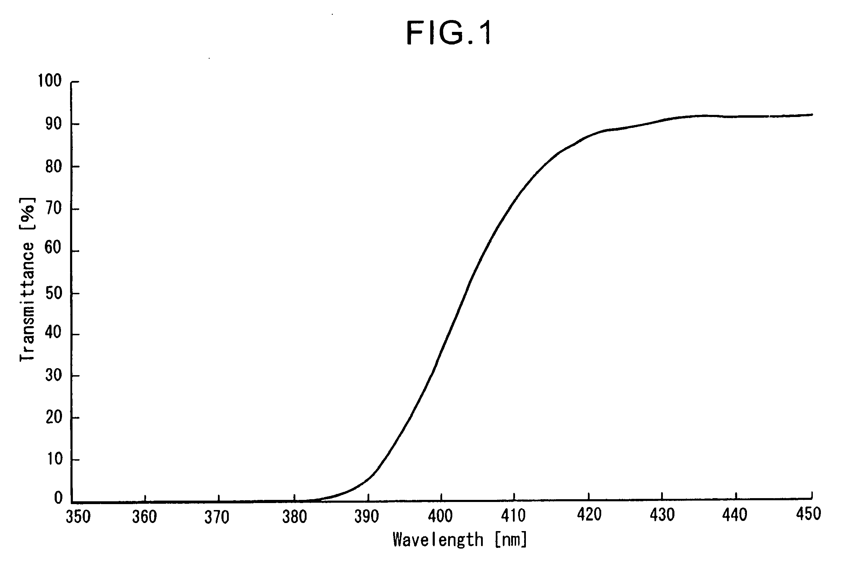

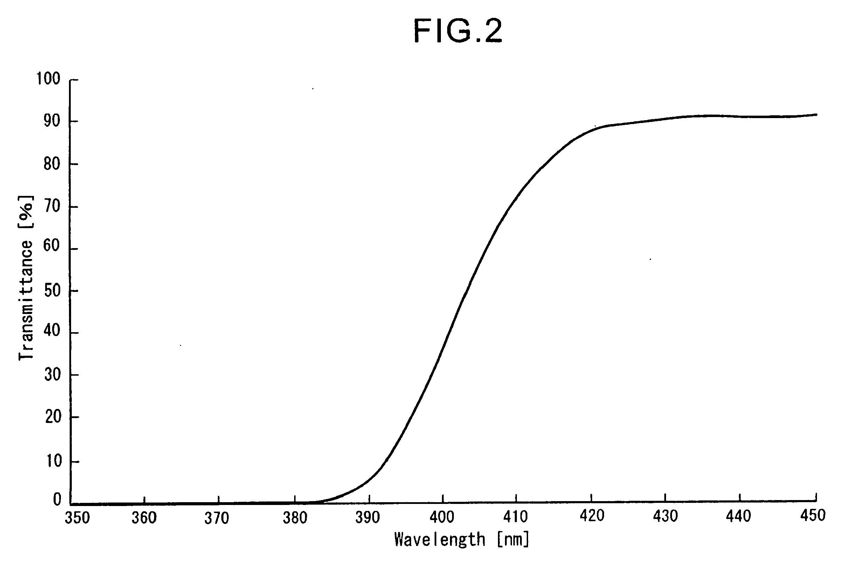

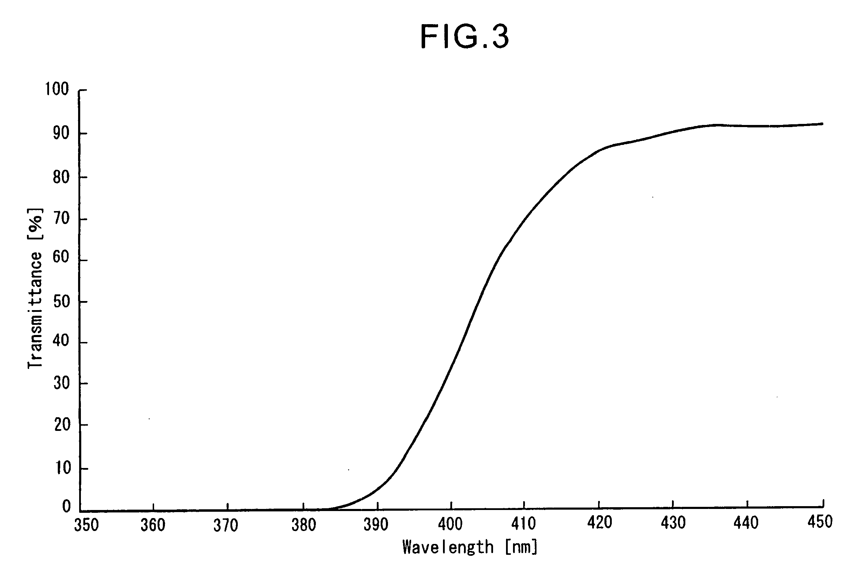

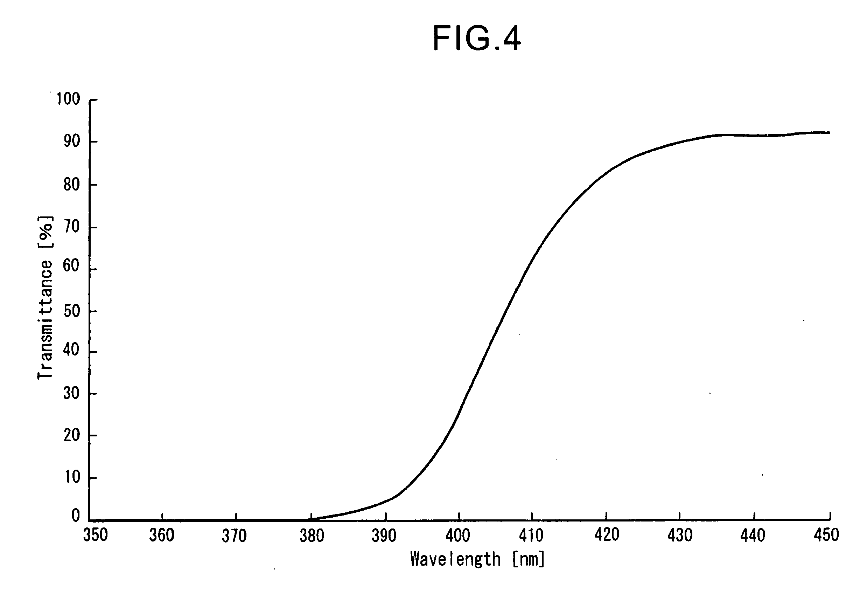

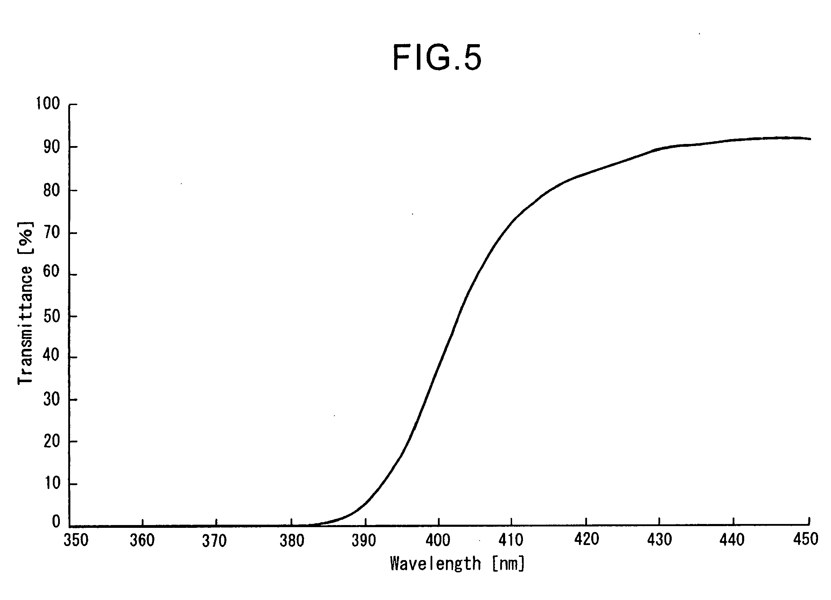

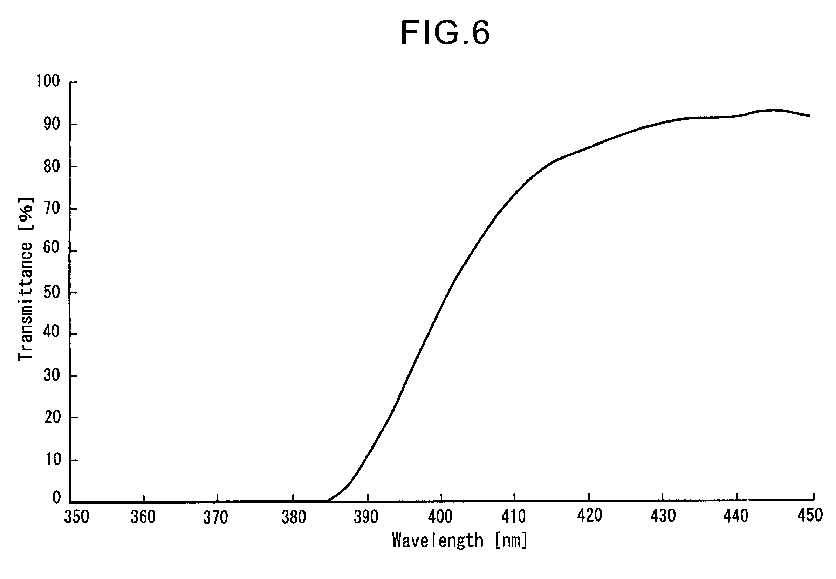

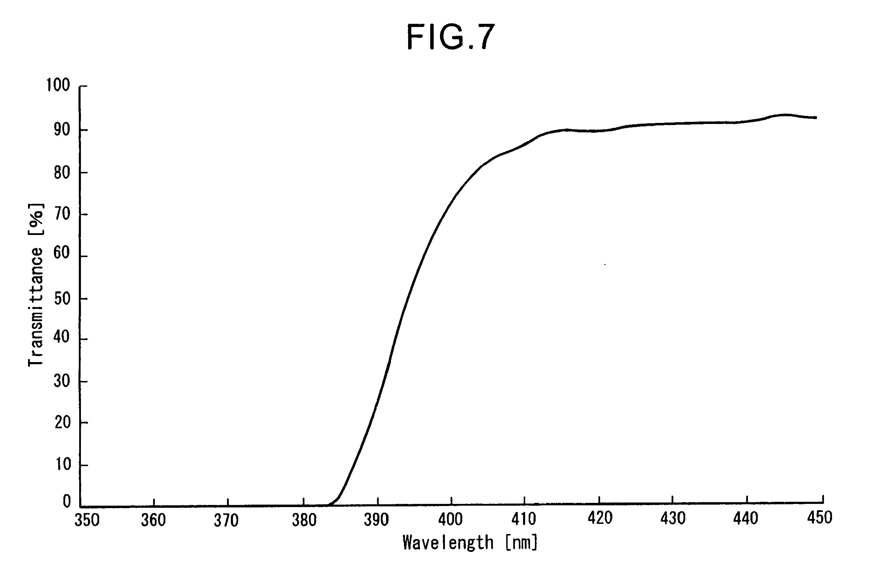

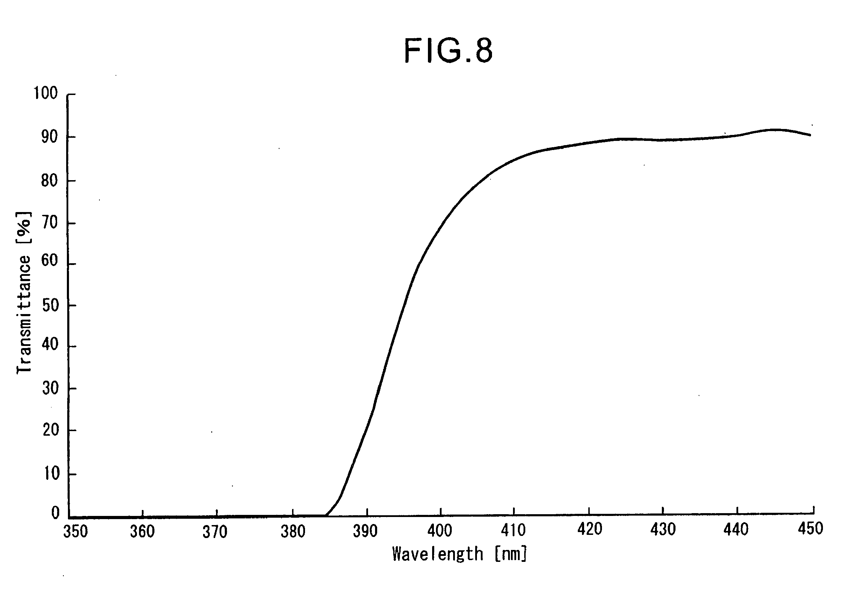

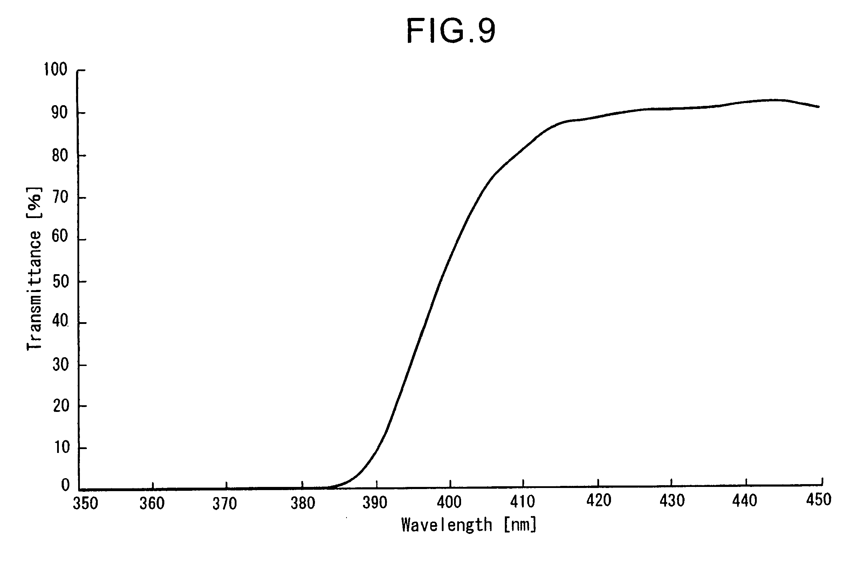

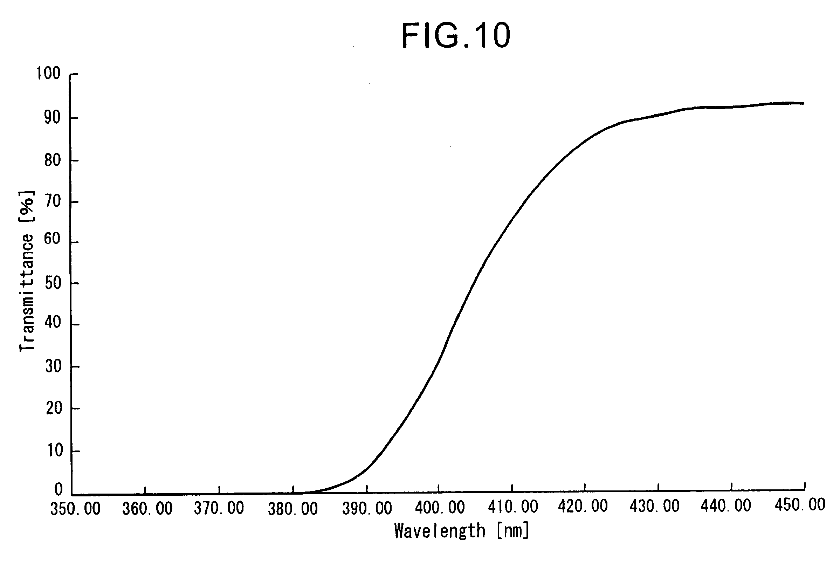

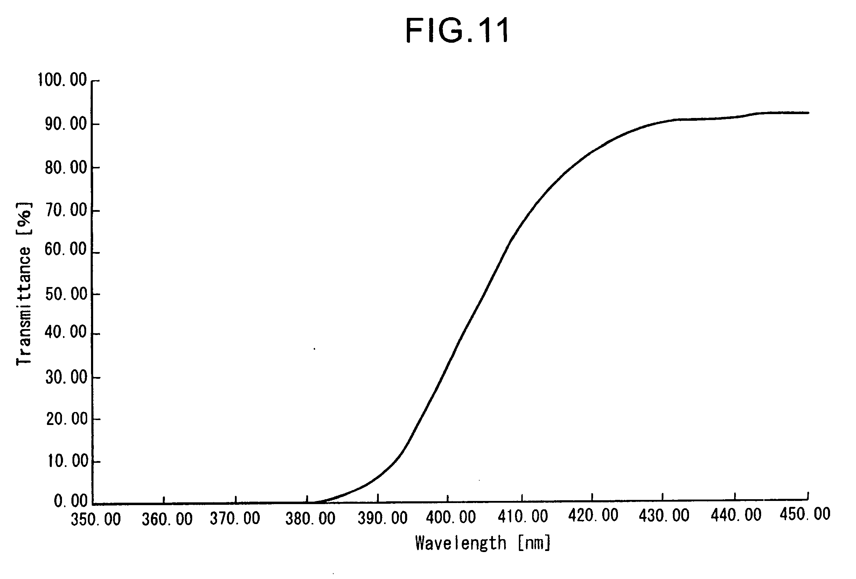

The physical properties of the lenses obtained in Examples 1 to 4 and Comparative Examples 1 to 7 are shown in Table 1, and the transmittance curves are shown in Figures 1 to 11.

**Table 1 - 1**

| | Material monomer (part by weight) | Initiator (part by weight) |
|---|---|---|
| Example | | |
| 1 | diethylene glycol bisallylcarbonate (100) | IPP (3.0) |
| 2 | diethylene glycol bisallylcarbonate (80) methyl methacrylate (20) | IPP (2.5) |
| 3 | diethylene glycol bisallylcarbonate (100) | IPP (3.0) |
| 4 | diethylene glycol bisallylcarbonate (100) | IPP (3.0) |

| Comparative Example | | |
|---|---|---|
| 1 | diethylene glycol bisallylcarbonate (100) | IPP (3.0) |
| 2 | diethylene glycol bisallylcarbonate (100) | IPP (3.0) |
| 3 | diethylene glycol bisallylcarbonate (100) | IPP (3.0) |
| 4 | diethylene glycol bisallylcarbonate (100) | IPP (3.0) |
| 5 | diethylene glycol bisallylcarbonate (100) | IPP (3.0) |
| 6 | diethylene glycol bisallylcarbonate (100) | IPP (3.0) |
| 7 | diethylene glycol bisallylcarbonate (100) | IPP (3.0) |

**Table 1 - 2**

| | Ultraviolet light absorbent (part by weight) | Transmittance (%) | Appearance | YI value |
|---|---|---|---|---|
| Example | | | | |
| 1 | 2,2',4'-trihydroxy-4-octyloxybenzophenone (0.05) | 1.0 | light yellow transparent | 1.55 |
| 2 | 2,2,4-trihydroxy-4-octyloxybenzophenone (0.05) | 1.0 | light yellow transparent | 1.35 |
| 3 | 2,2',4'-trihydroxy-4-octyloxybenzophenone (0.06) | 0.5 | light yellow transparent | 1.58 |
| 4 | 2,2',4'-trihydroxy-4-dodecyloxybenzophenone (0.06) | 1.1 | light yellow transparent | 1.75 |

| Comparative Example | | | | |
|---|---|---|---|---|
| 1 | 2,2',4,4'-tetrahydroxybenzophenone (0.05) | 1.0 | yellow transparent | 1.94 |
| 2 | 2-hydroxy-4-methoxybenzophenone (1.00) | 0.5 | yellow transparent | 2.14 |
| 3 | 2-(2-hydroxy-4-octyloxyphenyl)benzotriazole (0.15) | 1.9 | yellow transparent | 3.27 |
| 4 | 2,(2,4-dihydroxyphenylbenzotriazole (0.15) | 1.0 | yellow transparent | 3.84 |
| 5 | 5-chloro-2-(2,4-dihydroxyphenyl)benzotriazole (0.08) | 0.5 | yellow transparent | 3.66 |
| 6 | 2,2'-dihydroxy-4-methoxybenzophenone (0.08) | 1.2 | yellow transparent | 2.40 |
| 7 | 2,2'-dihydroxy-4-oxtyloxybenzophenone (0.15) | 1.0 | yellow transparent | 2.22 |

### Brief Description of Drawings

Figure 1 shows a diagram exhibiting the transmittance curve of the plastic lens obtained in Example 1.
Figure 2 shows a diagram exhibiting the transmittance curve of the plastic lens obtained in Example 2.
Figure 3 shows a diagram exhibiting the transmittance curve of the plastic lens obtained in Example 3.
Figure 4 shows a diagram exhibiting the transmittance curve of the plastic lens obtained in Example 4.
Figure 5 shows a diagram exhibiting the transmittance curve of the plastic lens obtained in Comparative Example 1.
Figure 6 shows a diagram exhibiting the transmittance curve of the plastic lens obtained in Comparative Example 2.
Figure 7 shows a diagram exhibiting the transmittance curve of the plastic lens obtained in Comparative Example 3.
Figure 8 shows a diagram exhibiting the transmittance curve of the plastic lens obtained in Comparative Example 4.
Figure 9 shows a diagram exhibiting the transmittance curve of the plastic lens obtained in Comparative Example 5.
Figure 10 shows a diagram exhibiting the transmittance curve of the plastic lens obtained in Comparative Example 6.
Figure 11 shows a diagram exhibiting the transmittance curve of the plastic lens obtained in Comparative Example 7.

## Claims

1. A plastic lens which comprises a plastic substrate and a benzophenone derivative, the plastic substrate being selected from a poly(thio)urethane resin, a sulfur-containing resin obtained by using compounds having an epithio group as the raw material and a resin obtained by using diethylene glycol bisallylcarbonate-based monomers as the raw material, **characterized in that** the benzophenone derivative is represented by following general formula (I): 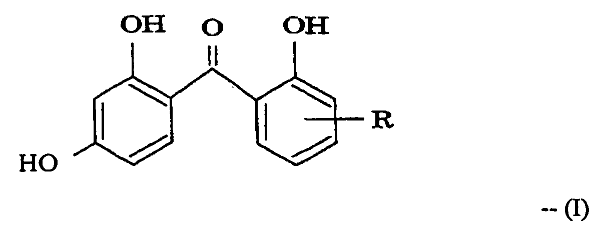 wherein R represents a linear or branched alkyl group having 2 to 12 carbon atoms or an alkoxyl group having 2 to 12 carbon atoms.

2. A plastic lens according to Claim 1, wherein the benzophenone derivative represented by general formula (I) is 2,2',4'-trihydroxy-4-octyloxybenzophenone or 2,2',4'-trihydroxy-4-dodecyloxybenzophenone.

3. A plastic lens according to any one of Claims 1 and 2, wherein the plastic substrate is a plastic substrate obtained by polymerizing a diethylene glycol bisallylcarbonate-based monomer.

4. A plastic lens according to any one of Claims 1 to 3, wherein the plastic substrate has a YI value of 1.8 or smaller and a transmittance of light having a wavelength of 385 nm of 5.0% or smaller at a central portion when the central portion has a thickness of 2.2 mm.

5. A plastic lens according to any one of Claims 1 to 4, wherein the plastic substrate is coated with at least one functional film selected from a film for improving impact strength, a hard coat film, an antireflection film and a water-repelling film.

6. A process for producing a plastic lens which comprises adding to a material monomer for a plastic substrate a benzophenone derivative, and preparing the plastic substrate by heating the material monomer for the plastic substrate comprising the benzophenone derivative, wherein the plastic substrate is selected from a poly(thio)urethane resin, a sulfur-containing resin obtained by using compounds having an epithio group as the raw material and a resin obtained by using diethylene glycol bisallylcarbonate-based monomers as the raw material, **characterized in that** the benzophenone derivative is represented by following general formula (I): 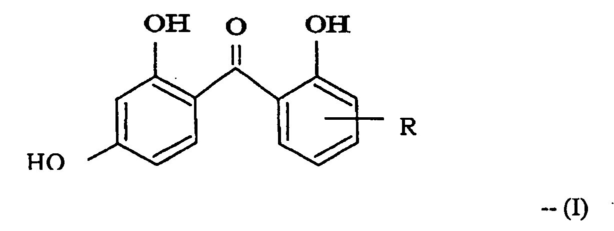 wherein R represents a linear or branched alkyl group having 2 to 12 carbon atoms or an alkoxyl group having 2 to 12 carbon atoms.

7. A process for producing a plastic lens according to Claim 6, wherein the benzophenone derivative represented by general formula (I) is 2,2',4'-trihydroxy-4-octyloxybenzophenone or 2,2^{'},4^{'}-trihydroxy-4-dodecyl-oxybenzophenone.

8. A process for producing a plastic lens according to any one of Claims 6 and 7, wherein the material monomer for the plastic substrate is a diethylene glycol bisallylcarbonate-based monomer.

9. A process for producing a plastic lens according to any one of Claims 6 to 8, wherein the plastic substrate has a YI value in a range of 0.7 to 1.8 and a transmittance of light having a wavelength of 385 nm of 5.0% or smaller at a central portion when the central portion has a thickness of 2.2 mm.

10. A process for producing a plastic lens according to any one of Claims 6 to 9, wherein the plastic substrate is coated with at least one functional film selected from a film for improving impact strength, a hard coat film, an antireflection film and a water-repelling film.

## Patentansprüche

1. Kunststofflinse, die ein Kunststoffsubstrat und ein Benzophenonderivat umfasst, wobei das Kunststoffsubstrat ausgewählt ist aus einem Poly(thio)urethanharz, einem schwefelenthaltenden Harz, das durch Verwendung von Verbindungen mit einer Epithiogruppe als Ausgangsmaterial erhalten wird, und einem Harz, das durch Verwendung von Diethylenglykolbisallylcarbonat-basierten Monomeren als Ausgangsmaterial erhalten wird, **dadurch gekennzeichnet, dass** das Benzophenonderivat durch die folgende allgemeine Formel (I) dargestellt wird: 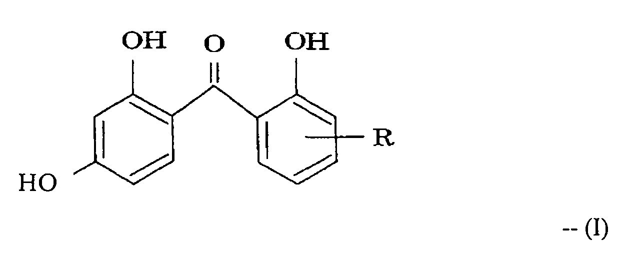 worin R eine lineare oder verzweigte Alkylgruppe mit 2 bis 12 Kohlenstoffatomen oder eine Alkoxylgruppe mit 2 bis 12 Kohlenstoffatomen darstellt.

2. Kunststofflinse nach Anspruch 1, wobei das durch die allgemeine Formel (I) dargestellte Benzophenonderivat 2,2',4'-Trihydroxy-4-octyloxybenzophenon oder 2,2',4'-Trihydroxy-4-dodecyloxybenzophenon ist.

3. Kunststofflinse nach einem der Ansprüche 1 und 2, wobei das Kunststoffsubstrat ein Kunststoffsubstrat ist, das durch Polymerisieren eines Diethylenglykolbisallylcarbonatbasierten Monomers erhalten wird.

4. Kunststofflinse nach einem der Ansprüche 1 bis 3, wobei das Kunststoffsubstrat einen YI-Wert von 1,8 oder kleiner und eine Durchlässigkeit für Licht mit einer Wellenlänge von 385 nm von 5,0% oder kleiner in einem zentralen Teil hat, wenn der zentrale Teil eine Dicke von 2,2 mm hat.

5. Kunststofflinse nach einem der Ansprüche 1 bis 4, wobei das Kunststoffsubstrat mit wenigstens einem funktionellen Film beschichtet ist, ausgewählt aus einem Film zur Verbesserung der Schlagzähigkeit, einem harten Überzugsfilm, einem Antireflektionsfilm und einem wasserabweisenden Film.

6. Verfahren zur Herstellung einer Kunststofflinse, umfassend Versetzen eines Materialmonomers für ein Kunststoffsubstrat mit einem Benzophenonderivat und Herstellen des Kunststoffsubstrats durch Erhitzen des Materialmonomers für das Kunststoffsubstrat, das das Benzophenonderivat umfasst, wobei das Kunststoffsubstrat aus einem Poly(thio)urethanharz, einem schwefelenthaltenden Harz, das durch Verwendung von Verbindungen mit einer Epithiogruppe als Ausgangsmaterial erhalten wird, und einem Harz, das durch Verwendung von Diethylenglykolbisallylcarbonat-basierten Monomeren als Ausgangsmaterial erhalten wird, ausgewählt wird, **dadurch gekennzeichnet, dass** das Benzophenonderivat durch die folgende allgemeine Formel (I) dargestellt wird: 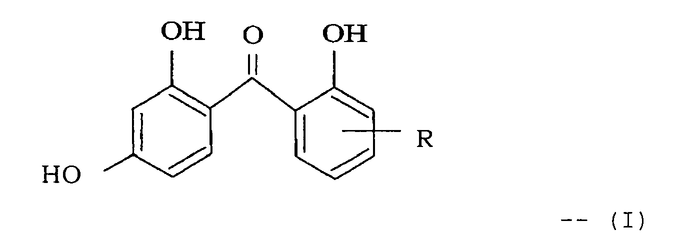 worin R eine lineare oder verzweigte Alkylgruppe mit 2 bis 12 Kohlenstoffatomen oder eine Alkoxylgruppe mit 2 bis 12 Kohlenstoffatomen darstellt.

7. Verfahren zur Herstellung einer Kunststofflinse nach Anspruch 6, wobei das durch die allgemeine Formel (I) dargestellte Benzophenonderivat 2,2',4'-Trihydroxy-4-octyloxybenzophenon oder 2,2',4'-Trihydroxy-4-dodecyloxybenzophenon ist.

8. Verfahren zur Herstellung einer Kunststofflinse nach einem der Ansprüche 6 und 7, wobei das Materialmonomer für das Kunststoffsubstrat ein Diethylenglykolbisallylcarbonatbasiertes Monomer ist.

9. Verfahren zur Herstellung einer Kunststofflinse nach einem der Ansprüche 6 bis 8, wobei das Kunststoffsubstrat einen YI-Wert im Bereich von 0,7 bis 1,8 hat und eine Durchlässigkeit für Licht mit einer Wellenlänge von 385 nm von 5,0% oder kleiner in einem zentralen Teil hat, wenn der zentrale Teil eine Dicke von 2,2 mm hat.

10. Verfahren zur Herstellung einer Kunststofflinse nach einem der Ansprüche 6 bis 9, wobei das Kunststoffsubstrat mit wenigstens einem funktionellen Film, ausgewählt aus einem Film zur Verbesserung der Schlägzähigkeit, einem harten Überzugsfilm, einem Antireflektionsfilm und einem wasserabweisenden Film, beschichtet ist.

## Revendications

1. Lentille en plastique comprenant un substrat en plastique et un dérivé de benzophénone, le substrat en plastique étant choisi parmi une résine de poly(thio)uréthane, une résine contenant du soufre obtenue en utilisant des composés ayant un groupe épithio en tant que matière première et une résine obtenue en utilisant des monomères à base de diéthylène glycol bisallylcarbonate en tant que matière première, **caractérisée en ce que** le dérivé de benzophénone est représenté par la formule générale (I) suivante : 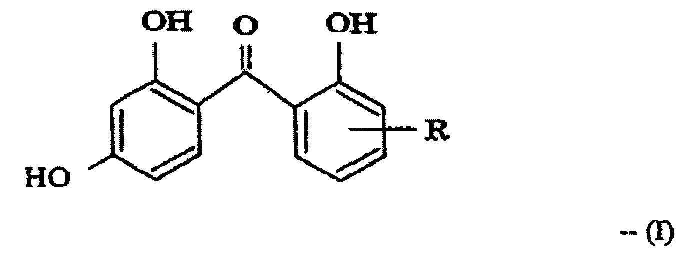 dans laquelle R représente un groupe alkyle linéaire ou ramifié ayant 2 à 12 atomes de carbone ou un groupe alcoxyle ayant 2 à 12 atomes de carbone.

2. Lentille en plastique selon la revendication 1, dans laquelle le dérivé de benzophénone représenté par la formule générale (I) est la 2,2',4'-trihydroxy-4-octyloxybenzophénone ou la 2,2',4'-trihydroxy-4-dodécyloxybenzophénone.

3. Lentille en plastique selon l'une quelconque des revendications 1 et 2, dans laquelle le substrat en plastique est un substrat en plastique obtenu en polymérisant un monomère à base de diéthylène glycol bisallylcarbonate.

4. Lentille en plastique selon l'une quelconque des revendications 1 à 3, dans laquelle le substrat en plastique a une valeur YI de 1,8 ou moins et un facteur de transmission de la lumière ayant une longueur d'onde de 385 nm de 5,0 % ou moins au niveau d'une partie centrale lorsque la partie centrale a une épaisseur de 2,2 mm.

5. Lentille en plastique selon l'une quelconque des revendications 1 à 4, dans laquelle le substrat en plastique est revêtu d'au moins un film fonctionnel choisi parmi un film améliorant la résistance au choc, un film de type couche dure, un film antireflet et un film hydrofuge.

6. Procédé de production d'une lentille en plastique comprenant l'ajout à un matériau monomère pour un substrat en plastique d'un dérivé de benzophénone, et la préparation du substrat en plastique en chauffant le matériau monomère pour le substrat en plastique comprenant le dérivé de benzophénone, dans lequel le substrat en plastique est choisi parmi une résine de poly(thio)uréthane, une résine contenant du soufre obtenue en utilisant des composés ayant un groupe épithio en tant que matière première et une résine obtenue en utilisant des monomères à base de diéthylène glycol bisallylcarbonate en tant que matière première, **caractérisé en ce que** le dérivé de benzophénone est représenté par la formule générale (I) suivante : 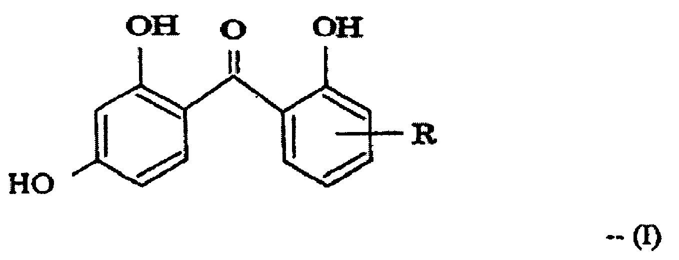 dans laquelle R représente un groupe alkyle linéaire ou ramifié ayant 2 à 12 atomes de carbone ou un groupe alcoxyle ayant 2 à 12 atomes de carbone.

7. Procédé de production d'une lentille en plastique selon la revendication 6, dans lequel le dérivé de benzophénone représenté par la formule générale (I) est la 2,2',4'-trihydroxy-4-octyloxybenzophénone ou la 2,2',4'-trihydroxy-4-dodécyloxybenzophénone.

8. Procédé de production d'une lentille en plastique selon l'une quelconque des revendications 6 et 7, dans lequel le matériau monomère pour le substrat en plastique est un monomère à base de diéthylène glycol bisallylcarbonate.

9. Procédé de production d'une lentille en plastique selon l'une quelconque des revendications 6 à 8, dans lequel le substrat en plastique a une valeur YI dans la plage de 0,7 à 1,8 et un facteur de transmission de la lumière ayant une longueur d'onde de 385 nm de 5,0 % ou moins au niveau d'une partie centrale lorsque la partie centrale a une épaisseur de 2,2 mm.

10. Procédé de production d'une lentille en plastique selon l'une quelconque des revendications 6 à 9, dans lequel le substrat en plastique est revêtu d'au moins un film fonctionnel choisi parmi un film améliorant la résistance au choc, un film de type couche dure, un film antireflet et un film hydrofuge.
